# EUROPEAN PATENT APPLICATION

(11) **EP 0 770 515 A2**
(43) Date of publication of application: **02.05.1997**
(21) Application number: 96830495.6
(22) Date of filing: 30.09.1996
(51) Int. Cl.: B60N 2/28

(54) **Safety chair for children**

(30) Priority: 27.10.1995 IT BS950094 U
(71) Applicant: FOPPA PEDRETTI S.p.A., 24064 Grumello del Monte, Bergamo (IT)
(72) Inventor: Bonetti, Luciano, Ing., 24060 Telgate, (Bergamo) (IT)
(74) Representative: Manzoni, Alessandro

(57) **Abstract**

A safety chair for children comprising a body (10) obtained enbloc by injection moulding with aeration holes (15) in the backrest (13) and in the seat (12) and with side portions (14) fitted with inserted protection elements (16) made in soft material. The backrest also supports a rack device for positioning of the chair belts.

## Description

The present invention pertains to safety chairs for children, and more particularly chairs designed to be fitted onto a car seat either facing forwards or facing backwards.

Several types of safety chairs are known already, including monocoque-body safety chairs. At present, such body is however obtained by blowing and is particularly bulky and rigid also at its sides, against which the child leans laterally. Said safety chairs are also provided with belts, which are usually anchored onto the back of the chair body. They pass through slots provided at various heights in the backrest and fasten the child in at the front. The chair belts however must be adjusted for height as the child grows taller, according to the height of the child's shoulders. Adjustment is however difficult and impractical, because each time the chair belts must be drawn out from the slots and introduced into other slots in a more adequate position. Moreover, the positions defined by the slots are relatively few, and consequently they can not permit any accurate positioning of the chair belts with respect to the actual size of the child.

It is an object of the present invention to provide a safety chair having a monocoque body produced by injection moulding, so as to obtain a lighter body in which aeration holes may be provided both in the seat and in the backrest, in order to limit child's perspiration and to further lighten the structure keeping however the required rigidity.

Another object of the invention is to provide a safety chair whose sides may be integrated with inserts made in soft material, for example polyurethane, so as to improve comfort and safety for the child, always keeping the required rigidity of the body.

A further object of the invention is to provide a safety chair whose backrest comprises longitudinal openings for the passage of chair belts, which permit to accurately adjust such belts for height without being bound to use only few slots in fixed positions.

Advantageously, belt positioning along said openings is achieved by means of an anchoring unit which engage with racks provided by the openings themselves.

Such objects and advantages are achieved with a safety chair according to at least claim 1.

Further details of the invention will become apparent from the continuation of the description made with reference to the accompanying drawings, in which:
Fig. 1 shows a side view of the safety chair;
Fig. 2 shows a perspective view of the safety chair with one side insert applied thereto, while the other is shown separate;
Fig. 3 shows a perspective view of the chair back;
Fig. 4 shows a partial sectional side view of the safety chair, provided with a position adjuster for the chair belts; and
Fig. 5 shows a sectional view according to line V-V in Fig. 4.

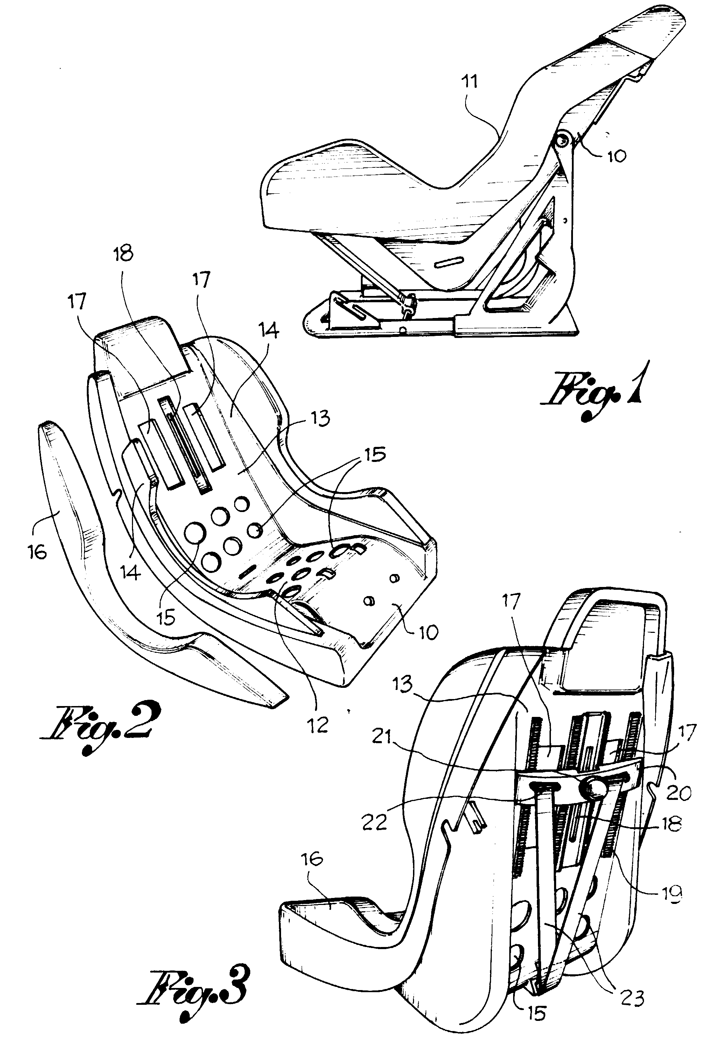

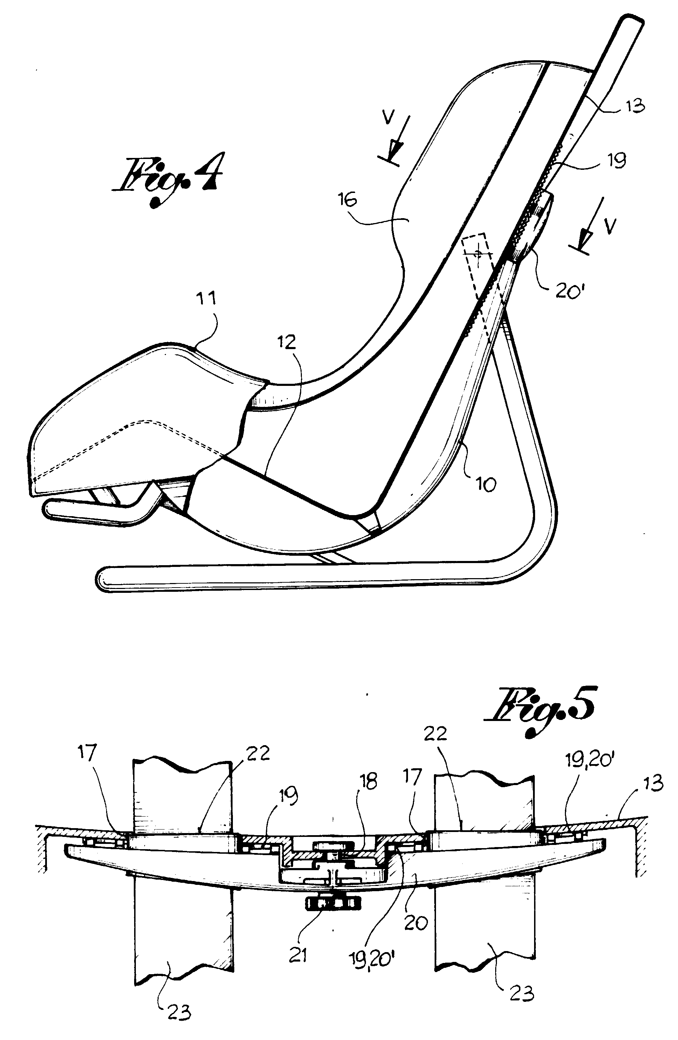

The safety chair proposed herein shows a supporting structure consisting in a monocoque body 10 obtained by injection moulding, for example in polypropylene, and then adequately fitted with upholstering or padding 11.

The body 10 comprises a seat 12 enbloc with a backrest 13 and side portions 14. The seat 12 and the backrest 13 are provided with aeration holes 15 in order to lighten the chair body and limit child's perspiration.

The side portions 14 are provided with soft protection elements 16, for instance in polyurethane, adequately applied thereto in order to improve comfort and safety for the child.

The backrest 13 is provided with two parallel openings 17 which extend lengthwise and with a slot 18 between said openings. By said openings, lengthwise in the backrest, racks 19 are provided which engage with a cross-piece 20 fitted with complementary teeth 20' for accurate positioning thereof along the racks and with a screw 21 engaging in said slot 18 for fastening said cross-piece to the backrest in any position required.

The cross-piece 20 comprises two slots 22 for the passage of the chair belts 23 which are anchored, at one end, onto the back or below the body 10 in a known manner. Said chair belts pass through said slots 22 and in said openings 17, and fasten in front, thus fastening the child in.

The possibility of positioning the cross-piece for height allows to easily and quickly adjust the belts according to the height of the child's shoulders.

## Claims

1. A safety chair for children comprising a body (10) enbloc with a seat (12), a backrest (13) and side portions (14), characterized in that said body (10) is obtained by injection moulding at least with aeration holes (15) in the backrest (13) and in the seat (12) and in that the side portions (14) are provided with inserted protection elements (16), made in soft material.

2. A safety chair for children according to claim 1, wherein the body comprises longitudinal, parallel openings (17) in the backrest (13) and racks (19) by said openings, wherein said racks (19) engage with a cross-piece (20) which may be adjusted for height and fastened to the backrest by means of a screw (21) sliding in a slot (18), and wherein said cross-piece is provided with through slots (22) coinciding with the openings (17) in the backrest (13), from said slots (22) in the cross-piece (20) and from said openings (17) in the backrest (13) extending chair belts adjustable for height as a consequence of the adjustment for height of the cross-piece (20) along the racks (19).

3. A safety chair for children comprising a body (10) enbloc with a seat (12), a backrest (13) and side portions (14), wherein said body (10) is obtained by injection moulding at least with aeration holes (15) in the backrest (13) and in the seat (12), wherein the side portions (14) are provided with inserted protection elements (16) made in soft material, wherein the body is provided with parallel, longitudinal openings (17) in the backrest (13) and with racks (19) by said openings, wherein said racks (19) engage with a cross-piece (20) which is adjustable for height and fastened to the backrest by means of a screw (21) sliding in a slot (18), and wherein the said cross-piece is provided with through slots (22) coinciding to the openings in the backrest (13) from said slots (22) in the cross-piece (20) and from said openings (17) in the backrest (13) extending chair belts (23) adjustable for height as a consequence of the adjustment for height of the cross-piece along the racks.
